# EUROPEAN PATENT SPECIFICATION

(11) **EP 4 342 556 B1**
(45) Date of publication and mention of the grant of the patent: **02.12.2026**
(21) Application number: 22885749.6
(22) Date of filing: 18.10.2022
(51) Int. Cl.: A63F 13/42

(54) **INTERACTION CONTROL METHOD AND APPARATUS, AND ELECTRONIC DEVICE AND STORAGE MEDIUM**
INTERAKTIONSSTEUERUNGSVERFAHREN UND -VORRICHTUNG SOWIE ELEKTRONISCHE VORRICHTUNG UND SPEICHERMEDIUM
PROCÉDÉ ET APPAREIL DE COMMANDE D'INTERACTION, DISPOSITIF ÉLECTRONIQUE ET SUPPORT D'ENREGISTREMENT

(30) Priority: 01.11.2021 CN 202111285220
(43) Date of publication of application: 27.03.2024
(73) Proprietor: Beijing Zitiao Network Technology Co., Ltd., Beijing 100190 (CN)
(72) Inventor: HU, Songtao, Beijing 100086 (CN)
(74) Representative: Marks & Clerk LLP
(86) International application number: PCT/CN2022/125961
(87) International publication number: WO 2023/071871

(56) References cited:
- CN-A- 110 538 452
- CN-A- 111 760 274
- CN-A- 112 619 145
- CN-A- 113 893 527
- JP-A- 2017 099 843
- US-A1- 2006 287 088
- US-A1- 2019 265 867
- US-B1- 11 007 439

## Description

### FIELD

The present disclosure relates to the technical field of gaming, and in particular, to an interaction controlling method, apparatus, electronic device, storage medium, computer program product and computer program.

### BACKGROUND

**In** many types of games, controls are configured to controlling virtual objects to activate skills in games; players may activate skills by triggering these controls. Some skills will enter a cool down time of the skills after being activated; during the cool down time, players can no longer trigger the activation of these skills until the cool down time ends. This method of skill activation has a problem of poor diversity. According to the abstract of patent publication US 2019/265867A1, for "Electronic Device for Facilitating User Interactions", "An electronic device includes a display, a timer and computing hardware configured to execute a software product. Execution of the software product results in generating and rendering a graphical user interface on the display with four or more user-selectable graphical objects."

### SUMMARY

The invention is defined by the independent claims. The dependent claims concern optional features of some embodiments of the invention.

To make the above objects, features and advantages of the present disclosure more apparent and understandable, a detailed illustration is presented below by way of preferred embodiments in cooperation with the accompanying drawings.

### BRIEF DESCRIPTION OF THE DRAWINGS

In order to more clearly illustrate the technical solution of the embodiments of the present disclosure, a brief introduction is presented below to the accompanying drawings used herein, which are incorporated into the specification to form a portion of the specification. These drawings show embodiments that conform to the present disclosure and are used to illustrate the technical solution of the present disclosure together with the specification. It should be understood that the accompanying drawings below merely show some embodiments of the present disclosure and should not be construed as limiting the scope. According to the accompanying drawings, those of ordinary skill in the art may further obtain other relevant drawings without the exercise of any inventive skill.
FIG. 1 shows a flowchart of an interaction controlling method provided by an embodiment of the present disclosure;
FIG. 2 shows a specific example of presenting a second target numerical value in an interaction controlling method provided by an embodiment of the present disclosure;
FIG. 3 shows a specific example of the content presented after a first button is triggered for a plurality of times in an interaction controlling method provided by an embodiment of the present disclosure;
FIG. 4 shows a schematic diagram of an interaction controlling apparatus provided by an embodiment of the present disclosure;
FIG. 5 shows a schematic diagram of an electronic device provided by an embodiment of the present disclosure.

### DETAILED DESCRIPTION OF EMBODIMENTS

In order to make the objectives, technical solution and advantages of the embodiments of the present disclosure clearer, the technical solution provided in the embodiments of the present disclosure will be clearly and completely described in conjunction with the accompanying drawings. Apparently, the embodiments to be described are merely a portion rather than all of the embodiments of the present disclosure. Usually, components of the embodiments of the present disclosure described and illustrated herein may be arranged and designed in various configurations. Therefore, the following detailed description of the embodiments of the present disclosure is not intended to limit the protection scope of the present disclosure but merely represents selected embodiments of the present disclosure. Based on the embodiments of the present disclosure, all other embodiments obtained by those skilled in the art without the exercise of any inventive skill fall under the protection scope of the present disclosure.

Studies suggest that skills configured to virtual objects in a game usually only have a fixed cool down time; that is, when a control corresponding to a certain skill is triggered, the virtual object activates the corresponding skill, and at the same time, the control of the skill is set to a cool down state; in the cool down state, the skill cannot be activated. With the rapid development of mobile phone games (mobile games), due to the operation mode and the limitation of the screen size of cell phones and other terminal devices, handheld games can only be configured with a limited number of controls to trigger skills, which leads to a limited number of skills for virtual objects and greatly reduces the diversity of skill activates.

Based on the foregoing studies, the present disclosure provides an interaction controlling method. By configuring in a game a target skill that comprises a plurality of sub-skills and configuring a first button for triggering the target skill, a player may activate different sub-skills in the target skill through a plurality of first trigger operations on a first button; while activating a corresponding sub-skill after the first button is triggered through the first trigger operation, the display of a second target numerical value is triggered; the player may update the second target numerical value through a second trigger operation; after the second target numerical value meets a preset condition, a first numerical value characterizing a cool down time of the target skill is updated. In this way, the cool down of the target skill may be dynamically adjusted, and further the player is provided with more operation modes while activating skills, which improves the diversity of skill activation.

The drawbacks that exist in the above solutions result from practice and careful study of the inventor. Therefore, the discovery process of the above problems and solutions proposed by the present disclosure below for the above problems should fall within the inventor's contribution to the present disclosure in the course of the present disclosure.

The technical solution provided in the embodiments of the present disclosure will be clearly and completely described in conjunction with the accompanying drawings. Apparently, the embodiments to be described are merely a portion rather than all of the embodiments of the present disclosure. Usually, components of the embodiments of the present disclosure described and illustrated herein may be arranged and designed in various configurations. Therefore, the following detailed description of the embodiments of the present disclosure is not intended to limit the protection scope of the present disclosure but merely represents selected embodiments of the present disclosure. Based on the embodiments of the present disclosure, all other embodiments obtained by those skilled in the art without the exercise of any inventive skill fall under the protection scope of the present disclosure.

It is noteworthy that similar numerals and letters represent similar items in the following drawings, so that once an item is defined in an accompanying drawing, it does not need to be further defined and explained in subsequent accompanying drawings.

For the sake of the understanding of this embodiment, first of all, a detailed description is presented to an interaction controlling method disclosed by the embodiments of the present disclosure. The execution body of the interaction controlling method disclosed herein is generally an electronic device with certain computing power, the electronic device including, for example, a terminal device or a server or other processing device. The terminal device may be user equipment (UE), a mobile device, a user terminal, a terminal, a cellular phone, a cordless phone, a personal digital assistant (PDA), a handheld device, a computing device, an on-board device, a wearable device, etc. In the terminal device, In the terminal device, there are installed game programs corresponding to games. It is noteworthy that games may also run in a server, relevant data processing is performed with the server, and the terminal device, as a display device, displays data sent by the server. When the game program runs in the terminal device, a game scene of a game comprises virtual objects, and a game operating interface of the game is presented via a graphical user interface of a display component, the game operating interface partly including the game scene. Wherein virtual objects may be displayed in the game operating interface. For example, in a third-person game, virtual objects may be displayed in the game operating interface; virtual objects may also not be displayed in the game operating interface, for example, in a first-person game, virtual objects are not displayed in the game operating interface.

In some possible implementations, the interaction controlling method may be performed by a processor in an electronic device invoking computer-readable instructions stored in a memory.

The interaction controlling method provided by the embodiments of the present disclosure will be illustrated below in the context where the execution body is a terminal device. In the terminal device, a game operating interface is displayed. At least one virtual object and a plurality of buttons are presented in the game operating interface. The at least one virtual object includes a first virtual object, and the plurality of buttons include a first button, which is used for triggering the first virtual object to activate a target skill. The target skill includes a plurality of sub-skills, wherein by repeatedly triggering the first button, the plurality of sub-skills of the target skill can be sequentially activated. The target skill is associated with a first target numerical value, characterizing a duration that after a final sub-skill of the plurality of sub-skills is activated and in the case of the first button being triggered, the target skill is not activated to respond. The duration for which the activation of the target skill is no longer responded to after the first button is trigger is also referred to as a cool down time (CD) of the target skill.

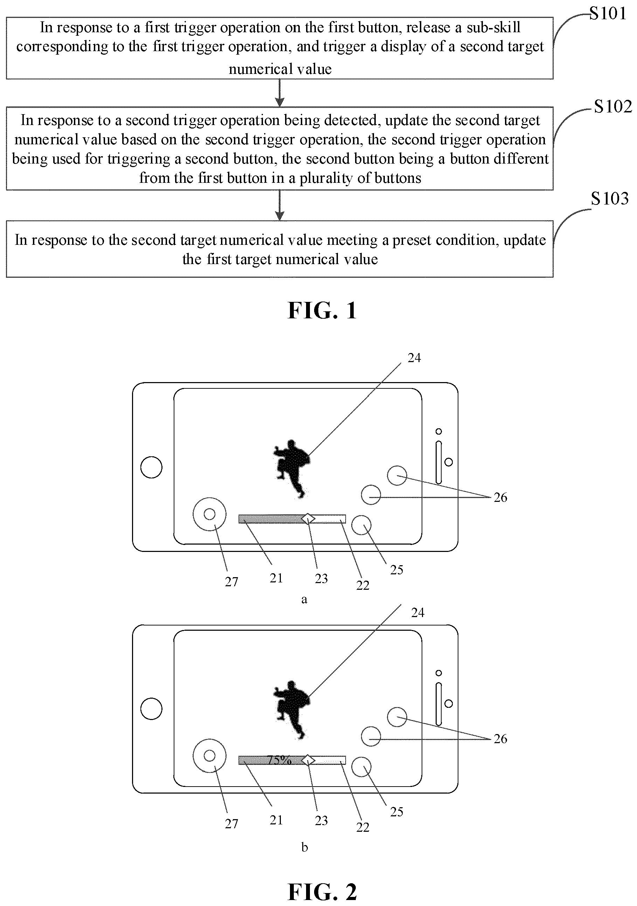

With reference to FIG. 1, this figure shows a flowchart of an interaction controlling method provided by an embodiment of the present disclosure. The method comprises steps S101 ~ S103, wherein,

S101: in response to a first trigger operation on the first button, activating a sub-skill corresponding to the first trigger operation, and triggering a display of a second target numerical value;

S102: in response to a second trigger operation being detected, updating the second target numerical value based on the second trigger operation, the second trigger operation being used for triggering a second button, the second button being a button different from the first button in the plurality of buttons;

S103: in the case that the second target numerical value meets a preset condition, updating the first target numerical value.

The game operating interface corresponding to the embodiments of the present disclosure comprises a first button for activating a target skill; the target skill comprises a plurality of sub-skills; in response to a first trigger operation on the first button, a sub-skill corresponding to the first trigger operation is activated, and the display of a second target numerical value is triggered; in response to a second trigger operation being detected, the second target numerical value is updated based on the second trigger operation; if the second target numerical value meets a preset condition, a first target numerical value is updated, the first target numerical value being used for characterizing a duration for which the activation of the target skill is no longer responded to when the first button is triggered after the last one of the plurality of sub-skills in the target skill is activated. By configuring the target skill that comprises a plurality of sub-skills and configuring the special update mechanism for the cool down time of the target skill, the diversity of the activation of game skills is improved.

Detailed illustration of S101 ~ S103 is presented below.

Regarding S101, when a player plays a game on a terminal device, the player will manipulate virtual objects in the game by using buttons displayed on a game operating interface. The buttons in the game operating interface may be used for activating a skill, moving a position, triggering resources located in a game scene (for example, picking up items dropped by nonplayer characters (NPCs) in the game after their hit points reach zero, or collecting ore, wood and other resources that have been refreshed in the game), using items in a backpack and other operations.

Wherein the plurality of buttons comprise the first button for triggering the target skill.

In the specific implementation, the first trigger operation on the first button includes, for example: a click operation, a drag operation, a long press operation, a re-press operation, or a combination of the above operations on the first button. As an example, suppose the trigger operation on the first button comprises a combination of a click operation and a drag operation. Through the drag operation, the activation direction of the skill may be controlled, and one of the plurality of sub-skills may be activated; afterwards, through the click operation, subsequent other sub-skills may be activated in the same activation direction; when the orientation of an attack object changes, the activation direction of a next sub-skill may be adjusted through the drag operation.

In addition, regarding the same sub-skill, if the first trigger operation differs, then the effect of triggering skills may also be different. For example, when a sub-skill is a physical attack skill and is triggered by the player through the click operation, the virtual object performs a normal attack on a virtual object of an enemy faction; if the sub-skill is triggered by the player through the long-press operation, the virtual object will enter a charge state and perform a heavy attack on a virtual object of an enemy faction after the charge reaches a certain condition.

After the first button is triggered by the first trigger operation, the terminal device, in response to the first trigger operation, activates a sub-skill corresponding to the first trigger option. Where the first sub-skill of the target skill has not yet been activated, the first button is triggered by the first trigger operation for N consecutive times to activate N sub-skills of the target skill in sequence.

As an example, where the first trigger operation is the click operation, the target skill comprises N sub-skills. Regarding different types of target skills, sub-skills may also differ. As an example, the target skill is a physical attack skill, and the N sub-skills are N sub-actions in a set of physical attack moves, each of which may inflict a certain damage value on a virtual object of the enemy faction; wherein, when each sub-skill is activated, the virtual object performs consecutive attack actions, and the attack actions may last for a certain duration. The N sub-skills may be connected to each other in in terms of action, i.e., when the virtual object activates different sub-skills, the actions corresponding to the different sub-skills have coherence; also there may be no action coherence, i.e., when the virtual object activates different sub-skills, the actions corresponding to the different sub-skills have no coherence. For another example, the target skill is a magic attack skill, the N sub-skills are N sub-actions during the magic process, and the N sub-actions may trigger different magic attack effects.

As an example, after the first button is triggered through the first trigger operation, either A or B might exist:

A: in the case that the sub-skill corresponding to the first trigger operation is a non-final sub-skill of the plurality of sub-skills, the non-final sub-skill is activated, and the display of the second target numerical value is triggered.

As an example, the second target numerical value may be used for characterizing an energy value accumulated by the player through the second trigger operation after the activation of the non-final sub-skill. In response to the accumulation of the energy value meeting a preset condition, a first target numerical value may be updated. Since the first target numerical value characterizes a cool down time needed by the target skill after the activation of the final sub-skill in the target skill is completed, after the non-final sub-skill is triggered through the first trigger operation, the cool down time of the target skill after completion of the activation may be updated through the second trigger operation.

To enable the player to have a clear understanding of the skill activation state of the game, the second target numerical value may be, for example, presented in the form of a number or a numerical value display control in the game operating interface. As an example, when the second target numerical value is presented in the form of a number, the second target numerical value may be presented at a preset position of the game operating interface, the second target numerical value may be a percentage value, such as "50%," "75%," etc., or may be a number value, such as "45," "90," etc., wherein the percentage is a percentage between the second target value and a preset value.

When the second target numerical value is presented in the form of a numerical value display control, the numerical value display control may include, for example: a first end, a second end, and a dynamic identifier located between the first end and the second end. The dynamic identifier may move between the first end and the second end with the update of the second target numerical value. The special effect material of the numerical value display control may be designed according to actual needs. For example, each time the second target numerical value is increased, the dynamic identifier is controlled to move to a second position after the increase from a first position before the increase. In addition, different colors may be configured to different second target numerical values, for example, a small second target numerical value may be configured with blue, green or other cold color; as the second target numerical value increases continuously, the color will gradually change to red and other warm color. In the example shown in FIG. 2, the numerical value display control is presented in the form of a progress bar. In this example, the progress bar comprises a first end 21, a second end 22, and a dynamic identifier 23 located between the first end 21 and the second end 22; 24 represents a virtual object; 25 represents a first button; 26 represents a second button; and 27 represents a joystick.

In addition, the numerical value display control may further be presented in combination of text. In the example shown in b of FIG. 2, where, in addition to including the numerical value display control presented in the form of a progress bar, the second target numerical value in the form of a percentage is further marked above the progress bar.

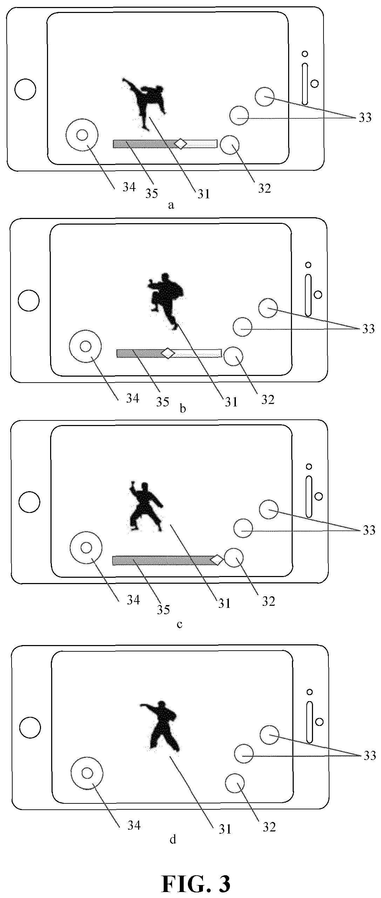

As shown in FIG. 3, the target skill comprises 4 sub-skills, and in response to activating the 4 sub-skills, a virtual object 31 performs different attack actions separately. 32 represents a first button, 33 represents a second button; 34 represents a joystick for controlling the virtual object 31 to move; wherein the game operating interface includes 3 buttons, and a first button is as represented by 32. In response to the first button 32 is triggered for the first time, the presented attack action is as shown in a of FIG. 3; When the first button 32 is triggered for the second time, the presented attack action is as shown in b of FIG. 3; when the first button 32 is triggered for the third time, the presented attack action is as shown in c of FIG. 3; when the first button 32 is triggered for the fourth time, the presented attack action is as shown in d of FIG. 3.

In the example corresponding to FIG. 3, in response to the first button is triggered for the first, second and third time, a numerical value display control 35 corresponding to the second target numerical value is presented respectively.

In a further embodiment of the present disclosure, the specific way of activating a non-final sub-skill and triggering the display of the second target numerical value when the sub-skill corresponding to the first trigger operation is the non-final sub-skill in the N sub-skills may be as below, for example: in response to a first trigger operation on the first button, if a sub-skill corresponding to the first trigger operation is a non-final sub-skill in the plurality of sub-skills, activating the non-final sub-skill; and detecting whether a current first target numerical value is a second preset numerical value; if the current first target numerical value is not the second preset numerical value, then triggering the display of the second target numerical value.

Here, the second preset numerical value characterizes, for example, a minimum value that is available to the first target numerical value. For example, the second preset numerical value can be set to 0, i.e., to characterize that the required cool down time after the final sub-skill of the target skill is activated as is 0 second.

If it is detected that the current first target numerical value is the minimum value that is available, then the display of the second target numerical value is not triggered, or even if the display of the second target numerical value is triggered, the first target numerical value will not be updated after the second target numerical value meets the preset condition.

B: in the case that the sub-skill corresponding to the first trigger operation is the final sub-skill in the plurality of sub-skills, then the final sub-skill is activated, and based on the first target numerical value, the first button is controlled to enter an invalid state; when the first button is in the invalid state, the target skill may not be activated to respond.

In the specific implementation, when the first button is in the invalid state, even if triggered by the player, the first button does not respond to the trigger of the player, until the cool down time of the target skill ends and the first button is reset to a valid state. At this point, the player triggers the first button, and in response to the trigger of the user, the first button activates a first sub-skill in the plurality of sub-skills; since the first sub-skill is a non-final sub-skill, the display of the second target numerical value will be triggered.

In the embodiments of the present disclosure, the first target numerical value is a dynamically updated numerical value. If each non-final sub-skill is triggered before the final sub-skill is activated, then none of the displayed second target numerical values meets the preset condition, at which point the first target numerical value may be a first preset numerical value; wherein the first preset numerical value characterizes an original cool down time of the target skill.

If the preset condition is met by triggering other sub-skills before the final sub-skill is triggered, then the first target numerical value is a value updated after meeting the preset condition. The specific update process may be referred to the detailed description of S103, which is not repeated here.

In a further embodiment of the present disclosure, after the final sub-skill is activated, the first target numerical value may further be reset to a first preset numerical value. Thus, the cool down time of the target skill is restored to the original cool down time. In the next activation cycle for activating the target skill, the cool down time of the target skill may still be updated by the method provided according to the embodiments of the present disclosure.

Regarding S102, in the specific implementation, the second trigger operation comprises, for example, a trigger operation on a second button other than the first button in the buttons presented in the game operating interface. The second button is used for triggering the first virtual object to activate other skill than the target skill or triggering the first virtual object to perform certain actions, such as leap, dodge and the like, or triggering the first virtual object to use items in a package, etc.

As an example, the present disclosure may update the second target numerical value through the following embodiment: based on the second button triggered by the second trigger operation, determining a second numerical value corresponding to the second button; updating the second target numerical value based on the second numerical value corresponding to the second button.

Here, the second numerical value is, for example, an energy value which can be increased by the energy characterized by the second target numerical value. Different second buttons correspond to different second numerical values.

As an example, a second numerical value corresponding to a second button for skill activation is higher than a second numerical value corresponding to a second button for other usage. Moreover, regarding second buttons for activating different skills, corresponding second numerical values may also differ. For example, a second button for activating a high-damage skill has a higher second numerical value than a second button for activating a low-damage skill.

Moreover, even though the same second button is triggered, different results may be caused, and the corresponding second numerical values may also be different.

As an example, (1): in the case that the second button is used for triggering the first virtual object to activate other skill than the target skill, if the skill belongs to AOE damage skills, the larger the number of second virtual objects being hit, the greater the corresponding second numerical value. Wherein the second virtual object is a virtual object different from the first virtual object. The second virtual object may belong to the same or different factions as/from the first virtual object. In the case that the first virtual object and the second virtual object belong to the same faction, the second skill may be used for increasing gain status and recovering hit points (HP) for the second virtual object.

(2): in the case that the second button is used for triggering the first virtual object to perform a certain action, the higher the timeliness of the action, the greater the corresponding second numerical value. For example, to trigger the dodge skill, the second numerical value corresponding to the dodge that avoids the attack of the second virtual object is greater than that of the dodge that fails to avoid the attack of the second virtual object.

(3): in the case that the second button is used for triggering the first virtual object to use items in the package, the items used are different, or the items play a different utility, the corresponding second numerical value is also different. For example, the items used are HP restoration potions. When the HP restoration potion is used, it will be thrown to a certain position and take effect in a certain area near that position; the gain status of HP restoration will be applied to all second virtual objects of the same faction located in that area, and the more the second virtual objects to which the HP restoration gain status is applied, the greater the corresponding second numerical value will be.

In response to a second trigger operation triggered by the player on the second button is detected, a second numerical value corresponding to the second trigger operation may be determined based on the second button and/or an operation result corresponding to triggering the second button, and the second target numerical value may be updated with the second numerical value.

As an example, the embodiments of the present disclosure provide a specific method of updating the second target numerical value based on a second trigger operation in response to the second trigger operation being detected, the method comprising: in response to a second trigger operation on the second button being detected, activating a skill corresponding to the second trigger operation, wherein the skill is different from the target skill; in response to the skill hitting a second virtual object, updating the second target numerical value based on the second trigger operation.

In this way, the player is prevented from accumulating the energy value for updating the cool down time of the target skill by controlling the first virtual object to perform ineffective actions, the difficulty of the game is raised and the fun of the game is improved.

Regarding S103, the first target numerical value may be updated using either of the following, but not limited to, C and D:
C: in the case that the second target numerical value meets the preset condition, updating the first target numerical value as the second preset numerical value.

Here, the second preset numerical value may be set according to actual needs.

As an example, the second preset numerical value is set to 0s. The target skill comprises 4 sub-skills s1 ~ s4; after any sub-skill of s1 ~ s3 is triggered and the corresponding second target numerical value meets the preset condition, then the cool down time of the target skill is set to 0s.

D: in the case that the second target numerical value meets the preset condition, updating the first target numerical value based on a first numerical value corresponding to the second trigger operation.

For example, the second preset numerical value is set to 0s; the original cool down time of the target skill is 15s. The target skill comprises 4 sub-skills s1 ~ s4. If any sub-skill of s1 ~ s3 is triggered and the corresponding second target numerical value meets the preset condition, then the cool down time of the target skill is reduced by 5s, i.e., the cool down time changes from 15s to 10s. If s1 ~ s3 are triggered and two of the corresponding second target numerical values meet the preset condition, the cool down time of the target skill is reduced by 10s, i.e., changes from 15s to 5s. If s1 ~ s3 are triggered and all of the corresponding second target numerical values meet the preset condition, the cool down time of the target skill is reduced by 15s, i.e., changes from 15s to 0s. In this way, a variety of methods of skill activation may be configured.

The preset condition comprises, for example, at least one of the following a1 ~ a4:
a1: the second target numerical value reaches a first preset numerical value threshold.

In this case, a first preset numerical value threshold may be set in advance. If the second target numerical value, while continuously increasing, reaches the first preset numerical value threshold, then it is determined that the second target numerical value reaches the preset condition.

At this point, for example, the first preset numerical value threshold is set to 100; when the second target numerical value is greater than or equal to 100, it is determined that the second target numerical value meets the preset condition. Then, the first target numerical value is updated.

Wherein there may be a plurality of first preset numerical value thresholds; the updated first target numerical values corresponding to the plurality of first preset numerical values may be different.

As an example, the first preset numerical value of the first target numerical value is 15s; the first preset numerical value threshold is 100, 150 and 200 respectively; if the second target numerical value is greater than or equal to 100 but less than 150, the first target numerical value may be updated as 10s; if the second target numerical value is greater than or equal to 150 but less than 200, the first target numerical value may be updated as 5s; if the second target numerical value is greater than or equal to 200, the first target numerical value may be updated as 0s.

a2: in the case that a percentage between the second target numerical value and a second preset numerical value threshold reaches a preset percentage.

In this case, according to different needs, the preset percentage may be, for example, set to at least one of: 50%, 75%, 100%, etc. For different preset percentages, the first target numerical value may be updated as different numerical values.

For example, the first preset numerical value of the first target numerical value is 15s. If a percentage of the second target numerical value and the second preset numerical value threshold reaches 50% but is less than 75% is greater than or equal to 100 but less than 150, the first target numerical value may be updated as 10s; if the second target numerical value is greater than or equal to 150 but less than 200, the first target numerical value may be updated as 5s; if the second target numerical value is greater than or equal to 200, the first target numerical value may be updated as 0s.

a3: the second target numerical value reaches the first preset numerical value threshold within a preset duration after the first trigger operation.

In this case, if the second target numerical value can reach the first preset numerical value threshold within a preset duration after the first trigger operation, it is considered that the second target numerical value meets the preset condition, and the update of the first target numerical value is triggered. If the second target numerical value fails to reach the first preset numerical value threshold within the preset duration after the first trigger operation, then the update of the first target numerical value will not be triggered. In this case, the display of the displayed second target numerical value can be canceled, or a special effect of failed energy accumulation can be displayed, characterizing that this accumulation of energy has failed, and the trigger of the first button fails to reduce the cool down time of the target skill.

Specifically, the setting method of the first preset numerical value threshold is similar to a1, which is not repeated here.

For example, the preset duration is 5 seconds, the first preset numerical value of the first target numerical value is 15s, and the first preset numerical value threshold is 100. If within 5 seconds, the second target numerical value is accumulated to be greater than 100 through the second trigger operation on the second button, then the first target numerical value is updated from 15s to 0s.

For another example, the preset duration is 5 seconds, the first preset numerical value of the first target numerical value is 15s, and the first preset numerical value threshold is 100, 150 and 200 respectively. If within 5 seconds, the second target numerical value is greater than or equal to 100 but less than 150 through the second trigger operation on the second button, then the first target numerical value is updated as 10s. If within 5 seconds, the second target numerical value is greater than or equal to 150 but less than 200, the first target numerical value may be updated as 5s. If within 5 seconds, the second target numerical value is greater than or equal to 200, the first target numerical value may be updated as 0s.

a4: a percentage between the second target numerical value and a second preset numerical value threshold reaches a preset percentage within a preset duration after the first trigger operation.

This case is similar to a3 and a2, which is not repeated here.

In order to avoid resetting the cool down of the target skill to a lower cool down time for a plurality of activation cycles of the target skill in a row and thus increasing the game difficulty, in a further embodiment of the present disclosure, after the first target numerical value is updated, the number of times for which a duration of the first button being in an invalid state is less than a first preset numerical value after the final sub-skill is repeatedly activated may be recorded; based on the number of times, a preset duration corresponding to the next activation cycle of the target skill is determined.

Here, the activation cycle of the target skill refers to an activation cycle that begins with the activation of the first of a plurality of sub-skills and ends with the activation of the final of a plurality of sub-skills.

Each time an activation cycle ends, it is determined whether or not the cool down time of the target skill corresponding to the activation cycle is less than a first preset numerical value (the original cool down time of the target skill). If yes, the number of times is increased by 1. If the cool down time is equal to the first preset numerical value, then the number of times is set to 0. Based on the number of times, a preset duration corresponding to the next activation cycle of the target skill is determined. The preset duration is the preset duration in a3 and a4.

As the number of times accumulates, the preset duration gets increasingly short. Thus, the operation difficulty of reducing the cool down time of the target skill is gradually increased, the diversity of skill activation is further improved, and the difficulty of the game as well as the fun are enhanced.

In a further embodiment, in response to the second target numerical value not reaching the preset condition and a third trigger operation on the first button being detected, the second target numerical value is reset to a third preset value.

Here, the second preset value is an original numerical value of the second target numerical value, which may be, for example, 0. After the first button is triggered through the first trigger operation and the second target numerical value is displayed, if the second target numerical value has not yet accumulated to meet the preset condition, the first button is triggered again, at which point the second target numerical value is reset, characterizing that the energy accumulation fails.

In this case, if the sub-skill corresponding to the third trigger operation is a non-final sub-skill in the plurality of sub-skills, the sub-skill corresponding to the third trigger operation is activated, and the display of the reset second target numerical value is triggered.

Here, the display mode of the reset second target numerical value is similar to the display mode of the second target numerical value in S101, which is not repeated.

In response to the sub-skill corresponding to the third trigger operation being the final sub-skill in the plurality of sub-skills, the sub-skill corresponding to the third trigger operation is activated, and based on the first target numerical value, the first button is controlled to enter an invalid state.

Here, the way of controlling the first button to enter the invalid state is similar to that of controlling the first button to enter the invalid state as described in the above embodiments, which is not repeated here.

In this way, the continuous update of the cool down state of the target skill is realized, so that the diversity of skill activation is improved, and the fun and operation difficulty of the game are enhanced.

Those skilled in the art may understand that in the above specific implementations of the methods, the drafting order of various steps does not imply any limitation of the implementation process by implying a strict order of execution, and the specific execution order of the steps should be determined by their functions and possible internal logic.

Based on the same inventive concept, the embodiments of the present disclosure further provide an interaction controlling apparatus corresponding to the interaction controlling method. Since the principle of the apparatus solving the problem in the embodiments of the present disclosure is similar to that of the interaction controlling method described above, the implementation of the apparatus may be referred to that of the method, and repetitions are omitted here.

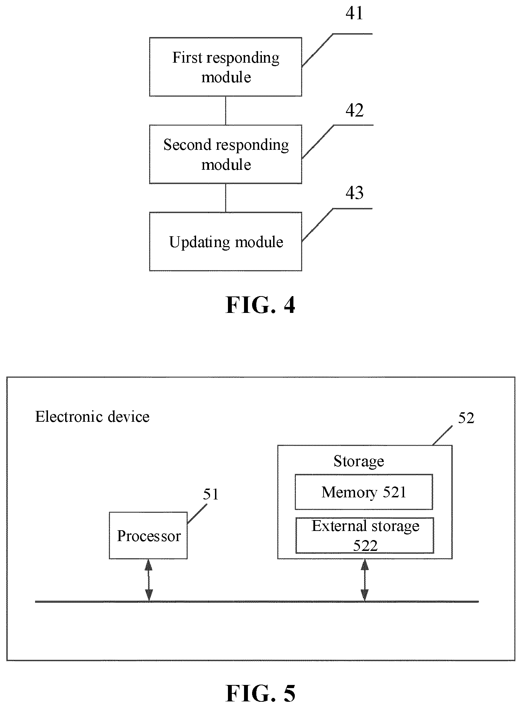

With reference to FIG. 4, this figure shows a schematic diagram of an interaction controlling apparatus provided by the embodiments of the present disclosure. The interaction controlling apparatus is applied to a terminal device, in which a game operating interface is displayed. At least one virtual object and a plurality of buttons are presented in the game operating interface; the at least one virtual object comprises a first virtual object, the plurality of buttons comprising a first button. The first button is used for triggering the first virtual object to activate a target skill, which comprises a plurality of sub-skills. Wherein by repeatedly triggering the first button, a plurality of sub-skills of the target skill can be sequentially activated. The target skill is associated with a first target numerical value, which characterizes a duration that after a final sub-skill of the plurality of sub-skills is activated and in the case of the first button being triggered, the target skill is not activated to respond. The apparatus comprises:
a first responding module 41, configured to in response to a first trigger operation on the first button, activate a sub-skill corresponding to the first trigger operation, and trigger a display of a second target numerical value;
a second responding module 42, configured to in response to a second trigger operation being detected, update the second target numerical value based on the second trigger operation, the second trigger operation being used for triggering a second button, the second button being a button different from the first button in the plurality of buttons;
an updating module 43, configured to in the case that the second target numerical value meets a preset condition, update the first target numerical value.

In a possible implementation, when, in response to the first trigger operation on the first button, activate the sub-skill corresponding to the first trigger operation and triggering the display of the second target numerical value, the first responding module 41 is configured to:
in response to the first trigger operation on the first button, in the case of the sub-skill corresponding to the first trigger operation is a non-final sub-skill in the plurality of sub-skills, activate the non-final sub-skill and triggering the display of the second target numerical value;
in the case that the sub-skill corresponding to the first trigger operation is the final sub-skill in the plurality of sub-skills, activate the final sub-skill, and control the first button to enter an invalid state based on the first target numerical value, wherein the target skill is not activated to respond in the case of the first button being in the invalid state.

In a possible implementation, after activating the final sub-skill, the first responding module 41 is further configured to:
reset the first target numerical value to a first preset numerical value.

In a possible implementation, when, in response to the first trigger operation on the first button, in the case that the sub-skill corresponding to the first trigger operation is the non-final sub-skill in the plurality of sub-skills, activating the non-final sub-skill and triggering the display of the second target numerical value, the first responding module 41 is configured to:
in response to the first trigger operation on the first button, in the case that the sub-skill corresponding to the first trigger operation is the non-final sub-skill in the plurality of sub-skills, activate the non-final sub-skill; and detect whether a current first target numerical value is a second preset numerical value; in the case that the current first target numerical value is not the second preset numerical value, trigger the display of the second target numerical value.

In a possible implementation, when in the case that the second target numerical value meets the preset condition, updating the first target numerical value, the updating module 43 is configured to:
in the case that the second target numerical value meets the preset condition, update the first target numerical value to the second preset numerical value;
   or,
in the case that the second target numerical value meets the preset condition, update the first target numerical value based on a first numerical value corresponding to the second trigger operation.

In a possible implementation, when triggering the display of the second target numerical value, the first responding module 41 is configured to:
present a numerical value display control corresponding to the second target numerical value at a preset position of the game operating interface, the numerical value display control comprising a first end, a second end, and a dynamic identifier located between the first end and the second end.

In a possible implementation, after in response to the second trigger operation being detected, updating the second target numerical value based on the second trigger operation, the first responding module 41 is further configured to:
adjust a position of the dynamic identifier between the first end and the second end based on the updated second target numerical value.

In a possible implementation, when, in response to the second trigger operation being detected, updating the second target numerical value based on the second trigger operation, the second responding module 42 is configured to:
determine a second numerical value corresponding to the second button based on the second button triggered by the second trigger operation;
update the second target numerical value based on the second numerical value corresponding to the second button.

In a possible implementation, when, in response the second trigger operation being detected, updating the second target numerical value based on the second trigger operation, the second responding module 42 is configured to:
in response to the second trigger operation on the second button being detected, activate a skill corresponding to the second trigger operation, wherein the skill is different from the target skill;
in response to the skill hitting a second virtual object, update the second target numerical value based on the second trigger operation.

In a possible implementation, the preset condition comprises at least one of the following:
the second target numerical value reaches a first preset numerical value threshold;
a percentage between the second target numerical value and a second preset numerical value threshold reaches a preset percentage;
the second target numerical value reaching the first preset numerical value threshold within a preset duration after the first trigger operation;
a percentage between the second target numerical value and the second preset numerical value threshold reaching a preset percentage within a preset duration after the first trigger operation.

In a possible implementation, after updating the first target numerical value, the updating module 43 is further configured to:
record a number of times that a duration of the first button being in an invalid state is less than a preset numerical value after the final sub-skill is repeatedly activated;
determine a preset duration corresponding to the next activation cycle of the target skill based on the number of times.

In a possible implementation, the second responding module 42 is further configured to: in response to the second target numerical value not meeting the preset condition and a third trigger operation on the first button being detected, reset the second target numerical value to a third preset value.

In a possible implementation, the first responding module 41 is further configured to: in response to a sub-skill corresponding to the third trigger operation being a non-final sub-skill in the plurality of sub-skills, activate the sub-skill corresponding to the third trigger operation, and triggering a display of the reset second target numerical value;
in response to the sub-skill corresponding to the third trigger operation being a final sub-skill in the plurality of sub-skills, activate the sub-skill corresponding to the third trigger operation, and controlling the first button to enter an invalid state based on the first target numerical value.

For the description of the processing flow of each module in the apparatus and the interaction flow between various modules, reference may be made to the relevant illustration in the above method embodiments, which is not detailed here.

The embodiments of the present disclosure further provide an electronic device. As shown in FIG. 5, this figure shows a structural schematic diagram of an electronic device provided by the embodiments of the present disclosure, comprising:
a processor 51 and a storage 52; the storage 52 storing the processor 51 executable machine-readable instructions, the processor 51 being used for executing the machine-readable instructions stored in the storage 52, the machine-readable instructions, when executed by the processor 51, causing the processor 51 to perform the following steps:
in response to a first trigger operation on the first button, activating a sub-skill corresponding to the first trigger operation, and triggering a display of a second target numerical value;
in response to a second trigger operation being detected, updating the second target numerical value based on the second trigger operation, the second trigger operation being used for triggering a second button, the second button being a button different from the first button in the plurality of buttons;
in the case that the second target numerical value meets a preset condition, updating the first target numerical value.

The storage 52 comprises a memory 521 and an external storage 522; here the memory 521 is also referred to as an internal storage for temporarily storing operational data in the processor 51 and data exchanged with the external storage 522 such as a hard disk, the processor 51 exchanging data with the external storage 522 via the memory 521.

The specific execution process of the instructions may be referred to the steps of the interaction controlling method in the embodiments of the present disclosure, which is not detailed here.

The embodiments of the present disclosure further provide a computer-readable storage medium, on which a computer program is stored, the computer program, when executed by a processor, performing steps of an interaction controlling method as described in the above method embodiments, wherein the storage medium may be a volatile or a non-volatile computer-readable storage medium.

The embodiments of the present disclosure further provide a computer program product, which carries program codes, instructions included in the program codes being used for performing steps of an interaction controlling method as described in the above method embodiments. For details, reference may be made to the above method embodiments, which is not detailed here.

The computer program product may be implemented as hardware, software or a combination thereof. In an optional embodiment, the computer program product is embodied as a computer storage medium. In a further optional embodiment, the computer program product is embodied as a software product, such as a software development kit (SDK), etc.

The embodiments of the present disclosure further provide a computer program, which, when executed by a processor, performs steps of an interaction controlling method as described in the above method embodiments.

It is apparent to those skilled in the art that for the convenience and brevity of the description, the above-described specific working process of the system and apparatus may be referred to the corresponding process in the method embodiments, which is not detailed herein. In the several embodiments provided by the present disclosure, it may be understood that the disclosed system, apparatus and method may be implemented in other way. The above-described apparatus embodiments are merely schematic. For example, the division of units is merely a logical function division, and there may have other division mode in practical implementation; for another example, a plurality of units or components may be combined or integrated into another system, or some features may be omitted or not performed. In addition, the mutual coupling, direct coupling or communication connection as shown or discussed may be indirect coupling or communication connection via some communication interfaces, apparatuses or units, may be electrical, mechanical or in other form.

The units illustrated as separate parts may be or not be physically separated, and components shown as units may be or not be physical units, i.e., may be located at the same place or distributed over a plurality of network units. A portion or all of units may be selected for achieving the objective of the solution of the embodiments according to actual needs.

In addition, various functional units in the various embodiments of the present disclosure may be integrated in one processing unit, individual units may separately and physically exist, or two or more units may be integrated in one unit.

The functionality, if implemented as software functional units and sold and used as independent products, may be stored a non-volatile computer-readable storage medium executable to a processor. Based on such an understanding, the essence of the technical solution of the present disclosure or the portion making contribution to the prior art or the portion of the technical solution may be embodied as a software product, which is stored in a storage medium and comprises several instructions for causing a computer device (which may be a personal computer, a server, a network device, etc.) to perform all or part of the steps of the method as described in the various embodiments of the present disclosure. The above-mentioned storage medium comprises: a U disk, a removable hard disk, a read-only memory (ROM), a random access memory (RAM), a magnetic diskette, an optical disc and other various media capable of storing program codes.

## Claims

1. An interaction controlling method, applied to a terminal device; wherein a game operating interface is displayed in the terminal device; at least one virtual object and a plurality of buttons are presented in the game operating interface; the at least one virtual object comprises a first virtual object, and the plurality of buttons comprises a first button, the first button being used for triggering the first virtual object to activate a target skill, the target skill comprising a plurality of sub-skills, the plurality of sub-skills of the target skill being sequentially activated by repeatedly triggering the first button; the target skill being associated with a first target numerical value, the first target numerical value characterizing a duration during which, after a final sub-skill of the plurality of sub-skills is activated, the first button enters an invalid state and, in the case of the first button being triggered, the target skill is not activated to respond; and the method comprises:
in response to a first trigger operation on the first button and the first button is in a valid state, activating (S101) a non-final sub-skill of the plurality of sub-skills corresponding to the first trigger operation, and triggering a display of a second target numerical value;
in response to a second trigger operation on a second button being detected, updating (S102) the second target numerical value based on the second trigger operation, the second button being a button different from the first button in the plurality of buttons; and
in response to the updated second target numerical value meeting a preset condition, updating (S103) the first target numerical value;
in response to a further trigger operation on the first button activating the final sub-skill of the plurality of sub-skills, controlling the first button to enter the invalid state for an adjusted duration based on the updated first target numerical value,
wherein updating (S103) the first target numerical value in response to the updated second target numerical value meeting the preset condition comprises:
updating the first target numerical value based on the updated second target numerical value to a second preset numerical value; or
updating the first target numerical value based on a first numerical value corresponding to the second trigger operation.

2. The method according to Claim 1, wherein in response to the first trigger operation on the first button and the first button is in a valid state, activating the sub-skill corresponding to the first trigger operation and triggering the display of the second target numerical value comprises:
in response to the first trigger operation on the first button, in the case of the sub-skill corresponding to the first trigger operation is a non-final sub-skill in the plurality of sub-skills, activating the non-final sub-skill and triggering the display of the second target numerical value; and
in the case that the sub-skill corresponding to the first trigger operation is the final sub-skill in the plurality of sub-skills, activating the final sub-skill, and controlling the first button to enter the invalid state based on the first target numerical value, wherein the target skill is not activated to respond in the case of the first button being in the invalid state.

3. The method according to Claim 2, wherein after activating the final sub-skill, the method further comprises:
resetting the first target numerical value to a first preset numerical value.

4. The method according to Claim 2, wherein in response to the first trigger operation on the first button, in the case that the sub-skill corresponding to the first trigger operation is the non-final sub-skill in the plurality of sub-skills, activating the non-final sub-skill and triggering the display of the second target numerical value comprises:
in response to the first trigger operation on the first button, in the case that the sub-skill corresponding to the first trigger operation is the non-final sub-skill in the plurality of sub-skills, activating the non-final sub-skill; and
detecting whether a current first target numerical value is the second preset numerical value; and
in the case that the current first target numerical value is not the second preset numerical value, triggering the display of the second target numerical value.

5. The method according to any of Claims 1 to 4, wherein triggering the display of the second target numerical value comprises:
presenting a numerical value display control corresponding to the second target numerical value at a preset position of the game operating interface, the numerical value display control comprising a first end, a second end, and a dynamic identifier located between the first end and the second end.

6. The method according to Claim 5, wherein after in response to the second trigger operation on the second button being detected, updating the second target numerical value based on the second trigger operation, the method further comprises:
adjusting a position of the dynamic identifier between the first end and the second end based on the updated second target numerical value.

7. The method according to any of Claims 1 to 6, wherein in response to the second trigger operation on the second button being detected, updating the second target numerical value based on the second trigger operation comprises:
determining a second numerical value corresponding to the second button based on the second button triggered by the second trigger operation; and
updating the second target numerical value based on the second numerical value corresponding to the second button.

8. The method according to any of Claims 1 to 7, wherein in response the second trigger operation on the second button being detected, updating the second target numerical value based on the second trigger operation comprises:
in response to the second trigger operation on the second button being detected, activating a skill corresponding to the second trigger operation, wherein the skill is different from the target skill; and
in response to the skill hitting a second virtual object, updating the second target numerical value based on the second trigger operation.

9. The method according to any of Claims 1 to 8, wherein the preset condition comprises at least one of:
the second target numerical value reaching a first preset numerical value threshold;
a percentage between the second target numerical value and a second preset numerical value threshold reaching a preset percentage;
the second target numerical value reaching a first preset numerical value threshold within a preset duration after the first trigger operation; and
a percentage between the second target numerical value and a second preset numerical value threshold reaching a preset percentage within a preset duration after the first trigger operation.

10. The method according to Claim 9, wherein after updating the first target numerical value, the method further comprises:
recording a number of times that the duration of the first button being in the invalid state is less than a third preset numerical value after the final sub-skill is repeatedly activated; and
determining said preset duration, corresponding to a next activation cycle of the target skill, based on the number of times.

11. The method according to any of Claims 1 to 10, wherein the method further comprises: in response to the second target numerical value not meeting the preset condition and a third trigger operation on the first button being detected, resetting the second target numerical value to a third preset value.

12. The method according to Claim 11, wherein the method further comprises:
in response to a sub-skill corresponding to the third trigger operation being a non-final sub-skill in the plurality of sub-skills, activating the sub-skill corresponding to the third trigger operation, and triggering a display of the reset second target numerical value; and
in response to the sub-skill corresponding to the third trigger operation being a final sub-skill in the plurality of sub-skills, activating the sub-skill corresponding to the third trigger operation, and controlling the first button to enter an invalid state based on the first target numerical value.

13. The method according to any of Claims 1 to 12, wherein the second target numerical value is used for characterizing an energy value accumulated by the player through the second trigger operation after the release of the non-final sub-skill.

14. An electronic device, comprising: a processor (51), a memory (521) and a bus, the memory (521) storing machine-readable instructions executable by the processor (51), when the electronic device runs, the processor (51) and the memory (521) communicating via the bus, the machine-readable instructions, when executed by the processor (51), performing steps of the interaction controlling method according to any of Claims 1 to 13.

15. A computer-readable storage medium, wherein a computer program is stored on the computer-readable storage medium, the computer program, when executed by a processor, performing steps of the interaction controlling method according to any of Claims 1 to 13.

## Patentansprüche

1. Interaktionssteuerungsverfahren, das auf eine Endgerätevorrichtung angewendet wird; wobei eine Spielbedienoberfläche auf der Endgerätevorrichtung angezeigt wird; mindestens ein virtuelles Objekt und eine Vielzahl von Schaltflächen in der Spielbedienoberfläche präsentiert werden; das mindestens eine virtuelle Objekt ein erstes virtuelles Objekt umfasst, und die Vielzahl von Schaltflächen eine erste Schaltfläche umfassen, wobei die erste Schaltfläche zum Auslösen des ersten virtuellen Objekts verwendet wird, um eine Zielfertigkeit zu aktivieren, wobei die Zielfertigkeit eine Vielzahl von Teilfertigkeiten umfasst, wobei die Vielzahl von Teilfertigkeiten der Zielfertigkeit durch wiederholtes Drücken der ersten Schaltfläche nacheinander aktiviert werden; die Zielfertigkeit mit einem ersten numerischen Zielwert verknüpft ist, der erste numerische Zielwert eine Dauer kennzeichnet, während der die erste Schaltfläche, nachdem eine letzte Teilfertigkeit der Vielzahl von Teilfertigkeiten aktiviert worden ist, in einen ungültigen Zustand wechselt und im Falle, dass die erste Schaltfläche ausgelöst ist, die Zielfertigkeit als Reaktion darauf nicht aktiviert wird; und das Verfahren umfasst:
als Reaktion auf einen ersten Auslösevorgang auf der ersten Schaltfläche, und der ersten Schaltfläche in einem gültigen Zustand, Aktivieren (S101) einer nicht letzten Teilfertigkeit der Vielzahl von Teilfertigkeiten, die dem ersten Auslösevorgang entspricht, und Auslösen einer Anzeige eines zweiten numerischen Zielwerts;
als Reaktion auf Erkennung eines zweiten Auslösevorgangs auf einer zweiten Schaltfläche, Aktualisieren (S102) des zweiten numerischen Zielwerts basierend auf dem zweiten Auslösevorgang, wobei die zweite Schaltfläche eine Schaltfläche ist, die sich von der ersten Schaltfläche der Vielzahl von Schaltflächen unterscheidet; und
als Reaktion auf den aktualisierten zweiten numerischen Zielwert, der eine voreingestellte Bedingung erfüllt, Aktualisieren (S103) des ersten numerischen Zielwerts;
als Reaktion auf einen weiteren Auslösevorgang auf der ersten Schaltfläche, Aktivieren der letzten Teilfertigkeit der Vielzahl von Teilfertigkeiten, Steuern der ersten Schaltfläche, um eine angepasste Dauer lang, basierend auf dem aktualisierten ersten numerischen Zielwert, in den ungültigen Zustand einzutreten,
wobei das Aktualisieren (S103) des ersten numerischen Zielwerts als Reaktion auf den aktualisierten zweiten numerischen Zielwert, der die voreingestellte Bedingung erfüllt, umfasst:
Aktualisieren des ersten numerischen Zielwertes basierend auf dem aktualisierten zweiten numerischen Zielwert auf einen zweiten voreingestellten numerischen Wert; oder
Aktualisieren des ersten numerischen Zielwerts basierend auf einem ersten numerischen Wert, der dem zweiten Auslösevorgang entspricht.

2. Verfahren nach Anspruch 1, wobei, als Reaktion auf den ersten Auslösevorgang auf der ersten Schaltfläche und darauf, dass die erste Schaltfläche in einem gültigen Zustand ist, Aktivieren der Teilfertigkeit, die dem ersten Auslösevorgang entspricht, und Auslösen der Anzeige des zweiten numerischen Zielwerts umfassen:
als Reaktion auf den ersten Auslösevorgang auf der ersten Schaltfläche, im Falle, dass die Teilfertigkeit, die dem ersten Auslösevorgang entspricht, eine nicht letzte Teilfertigkeit in der Vielzahl der Teilfertigkeiten ist, Aktivieren der nicht letzten Teilfertigkeit und Auslösen der Anzeige des zweiten numerischen Zielwerts; und
im Falle, dass die Teilfertigkeit, die dem ersten Auslösevorgang entspricht, die letzte Teilfertigkeit in der Vielzahl von Teilfertigkeiten ist, Aktivieren der letzten Teilfertigkeit und Steuern der ersten Schaltfläche, um basierend auf dem ersten numerischen Zielwert in den ungültigen Zustand einzutreten, wobei die Zielfertigkeit nicht aktiviert ist, um im Falle, dass die erste Schaltfläche im ungültigen Zustand ist, zu reagieren.

3. Verfahren nach Anspruch 2, wobei das Verfahren nach dem Aktivieren der letzten Teilfertigkeit weiter umfasst:
Zurücksetzen des ersten numerischen Zielwerts auf einen ersten voreingestellten numerischen Wert.

4. Verfahren nach Anspruch 2, wobei, als Reaktion auf den ersten Auslösevorgang auf der ersten Schaltfläche, im Falle, dass die Teilfertigkeit, die dem ersten Auslösevorgang entspricht, die nicht letzte Teilfertigkeit in der Vielzahl der Teilfertigkeiten ist, Aktivieren der nicht letzten Teilfertigkeit und Auslösen der Anzeige des zweiten numerischen Zielwerts umfassen:
als Reaktion auf den ersten Auslösevorgang auf der ersten Schaltfläche, im Falle, dass die Teilfertigkeit, die dem ersten Auslösevorgang entspricht, die nicht letzte Teilfertigkeit in der Vielzahl der Teilfertigkeiten ist, Aktivieren der nicht letzten Teilfertigkeit; und
Erkennen, ob der aktuelle erste numerische Zielwert der zweite voreingestellte numerische Wert ist; und
im Falle, dass der aktuelle erste numerische Zielwert nicht der zweite voreingestellten numerische Wert ist, Auslösen der Anzeige des zweiten numerischen Zielwerts.

5. Verfahren nach einem der Ansprüche 1 bis 4, wobei Auslösen der Anzeige des zweiten numerischen Zielwerts umfasst:
Präsentieren einer Anzeigesteuerung des numerischen Werts, der dem zweiten numerischen Zielwert an einer voreingestellten Position der Spielbedienoberfläche entspricht, wobei die Anzeigesteuerung des numerischen Werts ein erstes Ende, ein zweites Ende und eine dynamische Kennung umfasst, die sich zwischen dem ersten Ende und dem zweiten Ende befindet.

6. Verfahren nach Anspruch 5, wobei das Verfahren, als Reaktion auf Erkennung des zweiten Auslösevorgangs auf einer zweiten Schaltfläche, nach dem Aktualisieren des zweiten numerischen Zielwerts basierend auf dem zweiten Auslösevorgang weiter umfasst:
Anpassen einer Position der dynamischen Kennung zwischen dem ersten Ende und dem zweiten Ende basierend auf dem aktualisierten zweiten numerischen Zielwert.

7. Verfahren nach einem der Ansprüche 1 bis 6, wobei, als Reaktion auf Erkennung des zweiten Auslösevorgangs auf einer zweiten Schaltfläche, Aktualisieren des zweiten numerischen Zielwerts basierend auf dem zweiten Auslösevorgang umfasst:
Bestimmen eines zweiten numerischen Wertes, der der zweiten Schaltfläche entspricht, basierend auf der zweiten Schaltfläche, die durch den zweiten Auslösevorgang ausgelöst wird; und
Aktualisieren des zweiten numerischen Zielwerts basierend auf dem zweiten numerischen Wert, der der zweiten Schaltfläche entspricht.

8. Verfahren nach einem der Ansprüche 1 bis 7, wobei, als Reaktion auf Erkennung des zweiten Auslösevorgangs auf einer zweiten Schaltfläche erkannt wird, Aktualisieren des zweiten numerischen Zielwerts basierend auf dem zweiten Auslösevorgang umfasst:
als Reaktion auf Erkennung des zweiten Auslösevorgangs auf der zweiten Schaltfläche, Aktivieren einer Fertigkeit, die dem zweiten Auslösevorgang entspricht, wobei sich die Fertigkeit von der Zielfertigkeit unterscheidet; und
als Reaktion darauf, dass die Fertigkeit ein zweites virtuelles Objekt trifft, Aktualisieren des zweiten numerischen Zielwerts basierend auf dem zweiten Auslösevorgang.

9. Verfahren nach einem der Ansprüche 1 bis 8, wobei die voreingestellte Bedingung mindestens eines umfasst von:
dem zweiten numerischen Zielwert, der einen ersten voreingestellten numerischen Schwellenwert erreicht;
einem Prozentsatz zwischen dem zweiten numerischen Zielwert und einem zweiten voreingestellten numerischen Schwellenwert, der einen voreingestellten Prozentsatz erreicht;
dem zweiten numerischen Zielwert, der innerhalb einer voreingestellten Dauer nach dem ersten Auslösevorgang einen ersten voreingestellten numerischen Schwellenwert erreicht; und
einem Prozentsatz zwischen dem zweiten numerischen Zielwert und einem zweiten voreingestellten numerischen Schwellenwert, der innerhalb einer voreingestellten Dauer nach dem ersten Auslösevorgang einen voreingestellten Prozentsatz erreicht.

10. Verfahren nach Anspruch 9, wobei das Verfahren nach dem Aktualisieren des ersten numerischen Zielwerts weiter umfasst:
Aufzeichnen einer Anzahl von Malen, dass die Dauer des ungültigen Zustands der ersten Schaltfläche nach wiederholter Aktivierung der letzten Teilfertigkeit weniger als ein Drittel eines voreingestellten numerischen Wertes beträgt; und
Bestimmen der voreingestellten Dauer, die einem nächsten Aktivierungszyklus der Zielfertigkeit entspricht, basierend auf der Anzahl an Malen.

11. Verfahren nach einem der Ansprüche 1 bis 10, wobei das Verfahren weiter umfasst: als Reaktion darauf, dass der zweite numerische Zielwert die voreingestellte Bedingung nicht erfüllt und ein dritter Auslösevorgang auf der ersten Schaltfläche erkannt wird, Zurücksetzen des zweiten numerischen Zielwerts auf einen dritten voreingestellten Wert.

12. Verfahren nach Anspruch 11, wobei das Verfahren weiter umfasst:
als Reaktion darauf, dass eine Teilfertigkeit, die dem dritten Auslösevorgang entspricht, eine nicht letzte Teilfertigkeit in der Vielzahl der Teilfertigkeiten ist, Aktivieren der Teilfertigkeit, die dem dritten Auslösevorgang entspricht und Auslösen einer Anzeige des zurückgesetzten zweiten numerischen Zielwertes; und
als Reaktion darauf, dass die Teilfertigkeit, die dem dritten Auslösevorgang entspricht, eine letzte Teilfertigkeit in der Vielzahl der Teilfertigkeiten ist, Aktivieren der Teilfertigkeit, die dem dritten Auslösevorgang entspricht und Steuern der ersten Schaltfläche, um basierend auf dem ersten numerischen Zielwert in einen ungültigen Zustand einzutreten.

13. Verfahren nach einem der Ansprüche 1 bis 12, wobei der zweite numerische Zielwert zum Kennzeichnen eines Energiewerts verwendet wird, der durch den Spieler durch den zweiten Auslösevorgang nach dem Freigeben der nicht letzten Teilfertigkeit angesammelt worden ist.

14. Elektronische Vorrichtung, umfassend: einen Prozessor (51), einen Speicher (521) und einen Bus, wobei der Speicher (521) maschinenlesbare Anweisungen speichert, die vom Prozessor (51) ausführbar sind, wenn die elektronische Vorrichtung läuft, wobei der Prozessor (51) und der Speicher (521) über den Bus kommunizieren, wobei die maschinenlesbaren Anweisungen, wenn sie vom Prozessor (51) ausgeführt werden, Schritte des Interaktionssteuerungsverfahrens nach einem der Ansprüche 1 bis 13 durchführen.

15. Computerlesbares Speichermedium, wobei auf dem computerlesbaren Speichermedium ein Computerprogramm gespeichert ist, wobei das Computerprogramm, wenn es von einem Prozessor ausgeführt wird, die Schritte des Interaktionssteuerungsverfahrens nach einem der Ansprüche 1 bis 13 durchführt.

## Revendications

1. Procédé de commande d'interaction appliqué à un dispositif terminal ; dans lequel une interface de commande de jeu est affichée sur le dispositif terminal ; au moins un objet virtuel et une pluralité de boutons sont présentés dans l'interface de commande de jeu ; l'au moins un objet virtuel comprend un premier objet virtuel, et la pluralité de boutons comprend un premier bouton, le premier bouton servant à déclencher le premier objet virtuel pour activer une compétence cible, la compétence cible comprenant une pluralité de sous-compétences, la pluralité de sous-compétences de la compétence cible étant activée séquentiellement par des pressions répétées sur le premier bouton ; la compétence cible étant associée à une première valeur numérique cible, la première valeur numérique cible caractérisant une durée pendant laquelle, après l'activation d'une dernière sous-compétence de la pluralité de sous-compétence, le premier bouton entre dans un état invalide et, si ce premier bouton est actionné, la compétence cible n'est pas activée en réponse ; et le procédé comprend :
en réponse à une première opération de déclenchement sur le premier bouton et le premier bouton étant dans un état valide, l'activation (S101) d'une sous-compétence non finale de la pluralité de sous-compétences correspondant à la première opération de déclenchement, et le déclenchement d'un affichage d'une seconde valeur numérique cible ;
en réponse à la détection d'une deuxième opération de déclenchement sur un second bouton, la mise à jour (S102) de la seconde valeur numérique cible sur la base de la deuxième opération de déclenchement, le second bouton étant un bouton différent du premier bouton parmi la pluralité de boutons ; et
en réponse à la mise à jour de la seconde valeur numérique cible répondant à une condition prédéfinie, la mise à jour (S103) de la première valeur numérique cible ;
en réponse à une nouvelle opération de déclenchement sur le premier bouton activant la dernière sous-compétence parmi la pluralité de sous-compétences, la commande du premier bouton pour entrer dans l'état invalide pendant une durée ajustée sur la base de la première valeur numérique cible mise à jour,
dans lequel la mise à jour (S103) de la première valeur numérique cible en réponse à la mise à jour de la seconde valeur numérique cible satisfaisant la condition prédéfinie comprend :
la mise à jour de la première valeur numérique cible en fonction de la seconde valeur numérique cible mise à jour, vers une seconde valeur numérique prédéfinie ; ou
la mise à jour de la première valeur numérique cible en fonction d'une première valeur numérique correspondant à la deuxième opération de déclenchement.

2. Procédé selon la revendication 1, dans lequel, en réponse à la première opération de déclenchement sur le premier bouton et lorsque le premier bouton est dans un état valide, l'activation de la sous-compétence correspondant à la première opération de déclenchement et le déclenchement de l'affichage de la seconde valeur numérique cible comprennent :
en réponse à la première opération de déclenchement sur le premier bouton, dans le cas où la sous-compétence correspondant à la première opération de déclenchement est une sous-compétence non finale parmi la pluralité de sous-compétences, l'activation de la sous-compétence non finale et le déclenchement de l'affichage de la seconde valeur numérique cible ; et
dans le cas où la sous-compétence correspondant à la première opération de déclenchement est la dernière sous-compétence parmi la pluralité de sous-compétences, l'activation de la dernière sous-compétence et la commande du premier bouton pour entrer dans l'état invalide en fonction de la première valeur numérique cible, dans lequel la compétence cible n'est pas activée pour répondre dans le cas où le premier bouton se trouve dans l'état invalide.

3. Procédé selon la revendication 2, dans lequel, après l'activation de la sous-compétence finale, le procédé comprend en outre :
la réinitialisation de la première valeur numérique cible à une première valeur numérique prédéfinie.

4. Procédé selon la revendication 2, dans lequel, en réponse à la première opération de déclenchement sur le premier bouton, dans le cas où la sous-compétence correspondant à la première opération de déclenchement est la sous-compétence non finale parmi la pluralité de sous-compétences, l'activation de la sous-compétence non finale et le déclenchement de l'affichage de la seconde valeur numérique cible comprennent :
en réponse à la première opération de déclenchement sur le premier bouton, dans le cas où la sous-compétence correspondant à la première opération de déclenchement est la sous-compétence non finale parmi la pluralité de sous-compétences, l'activation de la sous-compétence non finale ; et
la détection si une première valeur numérique cible actuelle correspond à la seconde valeur numérique prédéfinie ; et
dans le cas où la première valeur numérique cible actuelle ne correspond pas à la seconde valeur numérique prédéfinie, le déclenchement de l'affichage de la seconde valeur numérique cible.

5. Procédé selon l'une quelconque des revendications 1 à 4, dans lequel le déclenchement de l'affichage de la seconde valeur numérique cible comprend :
la présentation d'une commande d'affichage de valeur numérique correspondant à la seconde valeur numérique cible à une position prédéfinie de l'interface de commande de jeu, la commande d'affichage de valeur numérique comprenant une première extrémité, une seconde extrémité et un identifiant dynamique situé entre la première extrémité et la seconde extrémité.

6. Procédé selon la revendication 5, dans lequel, après la détection d'une deuxième opération de déclenchement sur le second bouton, la mise à jour de la seconde valeur numérique cible est effectuée en fonction de cette deuxième opération de déclenchement ; le procédé comprend en outre :
l'ajustement d'une position de l'identifiant dynamique entre la première extrémité et la seconde extrémité en fonction de la seconde valeur numérique cible mise à jour.

7. Procédé selon l'une quelconque des revendications 1 à 6, dans lequel, en réponse à la détection de la deuxième opération de déclenchement sur le second bouton, la mise à jour de la seconde valeur numérique cible basée sur la deuxième opération de déclenchement comprend :
la détermination d'une seconde valeur numérique correspondant au second bouton en fonction du second bouton déclenché par la deuxième opération de déclenchement ; et
la mise à jour de la seconde valeur numérique cible en fonction de la seconde valeur numérique correspondant au second bouton.

8. Procédé selon l'une quelconque des revendications 1 à 7, dans lequel, en réponse à la détection de la deuxième opération de déclenchement sur le second bouton, la mise à jour de la seconde valeur numérique cible basée sur la deuxième opération de déclenchement comprend :
en réponse à la détection de la seconde activation du second bouton, l'activation d'une compétence correspondant à cette seconde activation, dans laquelle la compétence est différente de la compétence cible ; et
en réponse à la compétence touchant un second objet virtuel, la mise à jour de la seconde valeur numérique cible en fonction de la deuxième opération de déclenchement.

9. Procédé selon l'une quelconque des revendications 1 à 8, dans lequel la condition prédéterminée comprend au moins un de :
la seconde valeur numérique cible atteignant un premier seuil de valeur numérique prédéfini ;
un pourcentage entre la seconde valeur numérique cible et un second seuil de valeur numérique prédéfini atteignant un pourcentage prédéfini ;
la seconde valeur numérique cible atteignant un premier seuil de valeur numérique prédéfini dans un délai prédéfini après la première opération de déclenchement ; et
un pourcentage entre la seconde valeur numérique cible et un second seuil de valeur numérique prédéfini atteignant un pourcentage prédéfini dans une durée prédéfinie après la première opération de déclenchement.

10. Procédé selon la revendication 9, dans lequel, après la mise à jour de la première valeur numérique cible, le procédé comprend en outre :
l'enregistrement d'un certain nombre de fois où la durée pendant laquelle le premier bouton est dans l'état invalide est inférieure à un tiers de la valeur numérique prédéfinie après l'activation répétée de la sous-compétence finale ; et
la détermination de ladite durée prédéfinie, correspondant à un prochain cycle d'activation de la compétence cible, sur la base du nombre de fois.

11. Procédé selon l'une quelconque des revendications 1 à 10, dans lequel le procédé comprend en outre : en réponse au fait que la seconde valeur numérique cible ne répond pas à la condition prédéfinie et qu'une troisième opération de déclenchement sur le premier bouton est détectée, la réinitialisation de la seconde valeur numérique cible à une troisième valeur prédéfinie.

12. Procédé selon la revendication 11, dans lequel le procédé comprend en outre :
en réponse au fait qu'une sous-compétence correspondant à la troisième opération de déclenchement soit une sous-compétence non finale parmi la pluralité de sous-compétences, l'activation de la sous-compétence correspondant à la troisième opération de déclenchement, et le déclenchement d'un affichage de la valeur numérique de la seconde cible réinitialisée ; et
en réponse au fait que la sous-compétence correspondant à la troisième opération de déclenchement est une sous-compétence finale parmi la pluralité de sous-compétences, l'activation de la sous-compétence correspondant à la troisième opération de déclenchement et la commande du premier bouton pour entrer dans un état invalide sur la base de la première valeur numérique cible.

13. Procédé selon l'une quelconque des revendications 1 à 12, dans lequel la seconde valeur numérique cible est utilisée pour caractériser une valeur d'énergie accumulée par le joueur grâce à la deuxième opération de déclenchement après la libération de la sous-compétence non finale.

14. Dispositif électronique comprenant : un processeur (51), une mémoire (521) et un bus, la mémoire (521) stockant des instructions lisibles par machine exécutables par le processeur (51), lorsque le dispositif électronique fonctionne, le processeur (51) et la mémoire (521) communiquant via le bus, les instructions lisibles par machine, lorsqu'elles sont exécutées par le processeur (51), effectuent les étapes du procédé de commande d'interaction selon l'une quelconque des revendications 1 à 13.

15. Support de stockage lisible par ordinateur, dans lequel un programme informatique est stocké sur le support de stockage lisible par ordinateur, le programme informatique, lorsqu'il est exécuté par un processeur, effectue les étapes du procédé de commande d'interaction selon l'une quelconque des revendications 1 à 13.
